# EUROPEAN PATENT APPLICATION

(11) **EP 1 162 060 A2**
(43) Date of publication of application: **12.12.2001**
(21) Application number: 01108964.6
(22) Date of filing: 10.04.2001
(51) Int. Cl.: B32B 27/08

(54) **Multilayer thermoplastic material in foil or sheet form, in particular for packaging food, method for the manufacture thereof and container made using said material**

(30) Priority: 08.06.2000 IT MI001271
(71) Applicant: RPC Cobelplast Montonate S.R.L., 21020 Montonate di Mornago (Varese) (IT)
(72) Inventor: Valerio, Silvano, 21100 Varese (IT)
(74) Representative: Faggioni, Marco, Dr. Ing.

(57) **Abstract**

Multilayer thermoplastic material in foil or sheet form, comprising an extruded base support layer consisting of HIPS and laminated, on at least one side thereof, with a first layer of metallized and optionally printed plastic material, and with a second layer of protective and heat-weldable plastic material. The base support layer is preferably a coextruded product consisting of four layers of HIPS having different physical and mechanical characteristics.

The invention also comprises an improved method for the manufacture of said multilayer material.

## Description

The present invention concerns a new multilayer thermoplastic material in foil or sheet form, and in particular a material with superior thermoforming characteristics, having a metallic appearance on at least one of its sides and being suitable for use as a packaging for food.

It is known that there is an increasingly widespread demand on the market, for packaging materials one or both the surfaces of which are metallized and preferably with characteristics suitable for use with food, this metallized surface coating ensuring a finish and an aesthetic appearance of the packaging which are notably superior and popular commercially. Metallized packaging materials are therefore being increasingly used for a wide range of applications and, in particular, also in the field of packaging, conservation and presentation of food.

The commercially known metallized thermoplastic materials, however, hitherto still have various drawbacks including, in particular, the lack of adequate thermoformability and, when they are used as food containers, the release of metals into the said foodstuffs, said release being able to occur relatively easily, in particular on account of the abrasion caused by the equipment used to take said foodstuffs from the containers.

These drawbacks are particularly evident in the ice-cream manufacturing sector where, at the end of the production process, the ice-cream is preferably packaged in standard-size trays which are made of metallized plastic material which are sent to the end distributor and used by the latter directly as a serving container, being inserted into the refrigerated counter.

These types of containers have a relatively large depth, for example normally comprised between 100 and 130 mm, and therefore the plastic material from which they are thermoformed undergoes a considerable degree of elongation during the thermoforming operations, with a stretching ratio which may be as much as 1/4, such that the mechanical characteristics of the end product result significantly altered as a result. Moreover, precisely because of the particular applications for which the abovementioned containers are used, it would be desirable if this material had a high impact and abrasion strenght, so as to avoid the formation of tears and the separation of particles which may be dispersed in the food.

The object of the present invention is therefore to provide a thermoformable plastic material which has a new structure and which is able to offer a particularly high degree of thermoformability, while maintaining optimum mechanical characteristics.

Another object of the present invention is that at least one of the surfaces of said material should have a metallic appearance.

A further object of the invention is that said material should be impact and abrasion resistant and that, in particular, the separation of particles should be entirely prevented.

Yet another object of the invention is that said material should also be suitable for use with food.

Yet another further object of the invention is that said material should also be heat-weldable such that the containers formed therewith may be easily sealed in a hygienically satisfactory manner, by simply heat-welding a suitable film thereto.

These objects are achieved, according to the present invention, by means of a multilayer thermoplastic material in foil or sheet form as defined in the main Claim 1) and in the secondary Claims 2) to 17).

The present invention also concerns a process for the manufacture of the multilayer thermoplastic material, as defined in Claims 18) to 20), and a container for foodstuffs, as defined in Claims 21) and 22).

Further characteristic features and advantages of the present invention however, will be more evident from the following detailed description of a preferred embodiment thereof, provided with reference to the accompanying drawings wherein:

Fig. 1 is a schematic cross-sectional view, on a larger scale, of a multilayer material in foil or sheet form according to the present invention; and

Fig. 2 is a schematic view which illustrates the manufacturing method of the multilayer material in foil or sheet form according to the present invention.

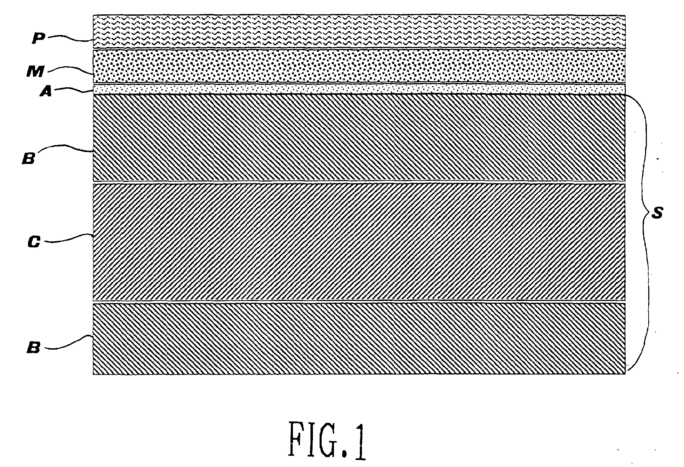

As clearly shown in Fig. 1, the multilayer thermoplastic material according to the present invention is formed by an extruded base support layer S on which a first metallized and optionally printed layer M and a second protective layer P are fixed. A bonding layer A is preferably arranged between the bas support layer S and the layer M.

According to the invention, the layer S is formed by a high impact strength polystyrene (abbreviated below as "HIPS" by means of which it is normally referred to in commerce), extruded in foil or sheet form. The first layer M is formed by a styrene-based material - preferably HIPS having a low rubber content, bi-oriented by means of bubble technology extrusion-previously metallized and optionally printed. The rubber content of the layer M is preferably between 0.8 and 1.2% by weight. The second layer P is formed by a polyolefine, and preferably by polyethylene, or by an ionomeric resin (sold by DUPOINT under the trademark SURLYN®) or by another similar material. The material used for the layer P must be suitable for use with food and if necessary weldable with other plastic materials using the conventional hot-bar technology, depending on the end use of the multilayer material; moreover, it is possible to choose the layer P so that it has a barrier effect or has peeling feature at the closing borders of the thermoformed product by heat-welding.

In the preferred embodiment, illustrated in Fig. 1, the base support layer S comprises a plurality of coextruded HIPS layers having different physical and mechanical characteristics, so as to impart to the material in foil form the desired overall characteristics. In particular, the base support layer S comprises a sandwich formed by two external layers B and by an intermediate layer C, wherein the layers B are formed by HIPS with a high elastic modulus, preferably a modulus greater than 2200 MPa (flexural modulus, as per the specifications ASTM D790), while the layer C is formed by HIPS having different mechanical characteristics, such as HIPS with a high ultimate elongation and high resilience, preferably a resilience greater than 120 J/m (Izod resilience with notch, as per specification STM D256). Moreover, in the layer C it is also possible to reuse the machining swarf. The presence of the layers B allows to provide, in all cases, the multilayer foil material to show improved mechanical properties both during the thermoforming process of this actual material - preventing possible collapse during thermoforming, due to reflection of the thermal radiation by the metallized layer M - and in the end product obtained therewith.

The base support layer S may have, associated therewith, a bonding layer A consisting of an extrudable polymeric adhesive or HIPS with a high rubber content, preferably a rubber content greater than 8% since the greater polarity of these materials allows easier and firmer bonding of the first laminated layer M. The layer A is preferably coextruded together with the sandwich formed by the layers B and C and on the side thereof intended to receive the subsequent laminated layers M and P.

A preferred process for manufacture of the multilayer material in foil or sheet form according to the present invention provides that the base support layer S, or the layer S combined with the layer A, is obtained by means of extrusion or by means of coextrusion, while the layers M and P are laminated in succession on the support layer S, immediately after extrusion, so as to perform a hot lamination process, which allows a markedly greater degree of bonding to be obtained.

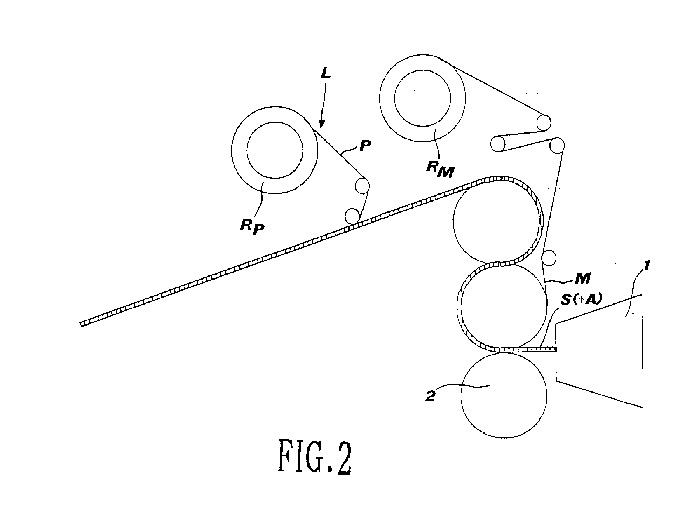

Fig. 2 schematically shows an extrusion head 1, from which the base support layer S, or the layer S associated with the layer A, is extruded or coextruded. This base support layer is then immediately laminated in the calender 2 together with the metallized and optionally printed layer M which is drawn from a respective feed roller R_{M}. Slightly further downstream, but preferably still along the line, a second lamination with the layer P is performed, said layer P being drawn from a respective feed roller Rₚ and optionally preheated at L prior to application.

As an alternative to the above described process, it is possible to envisage a single post-extrusion lamination step in which the base support layer S, optionally provided with the bonding layer A, is combined with a film formed by the layers M and P which are bonded together off-line, for example in the respective manufacturing process.

Still as another alternative, it is possible to envisage a single post-extrusion lamination step, in which the sole layer M is combined with the base support layer S provided with the bonding layer A, having however its metallized side facing the layer A. In this way the metallic coating is protected by the same layer M on which metallization has been performed.

The multilayer thermoplastic material in foil or sheet form above described allows to achieve all the desired objects. It in fact has a high degree of thermoformability, which is improved by the sandwich structure of the base support layer S. The metallized layer M is moreover completely protected from knocks and abrasions by the protective layer P such to prevent migration of particles into a foodstuff stored in a container formed by said material. Since the protective layer P may be formed by a polyolefine and in particular by polyethylene, namely by materials suitable for use with food, this object of the invention is also achieved. Finally, since the layer P may be formed by a heat-weldable material, hermetic sealing of a container formed with the multilayer material according to the invention is possible by simply applying onto said container, already filled with food, a suitable film for example also made of polyethylene, which film is then easily hot-welded onto the external surface P of the multilayer material according to the present invention.

Similar results are also obtained in the alternative manufacturing method above described, in which the layer P is not present and the layer M is applied with the metallized part facing the base support layer S. In this case also, in fact, the metallized coating is protected against external agents by the same layer M on which the metallization is performed.

As mentioned, the thermoformable material according to the present invention is suitable for use in a particularly successful manner with containers and serving devices of any type and in particular those which have a deep-drawn shape - such as, for example, the abovementioned ice-cream trays - allowing perfect hermetic and hygienic closure of the container and completely safe use thereof, namely without any possible contamination of the food with metal particles. Another preferred use of the material according to the invention consists, for example, in the formation of pastry trays where, compared to the existing laminated cardboard trays, it is possible to achieve significant advantages in terms of hygiene, lack of formation of fungi or mould, the possibility of washing and finally preservation of the mechanical properties even after repeated refrigeration/open-air cycles.

The containers produced with the multilayer material according to the present invention are also suitable for containing all those products which are packaged in modified atmospheres, owing to the barrier effect which it is possible to confer on said material, by suitably choosing the layer P.

## Claims

1. Multilayer thermoplastic material in foil or sheet form, **characterized in that** it comprises an extruded base support layer consisting of HIPS (S), laminated, on at least one side, with a first layer of metallized and optionally printed plastic material (M), and with a second layer of protective plastic material (P).

2. Multilayer thermoplastic material as in Claim 1, wherein a bonding layer (A) is arranged between said base support layer (S) and said first layer (M).

3. Multilayer thermoplastic material as in Claim 2), wherein said first metallized and optionally printed layer (M) is laminated on said base support layer (S) with the metallized and optionally printed side facing said base support layer (S), and said second protective layer (P) is formed by the non-metallized side of the same first layer (M).

4. Multilayer thermoplastic material as in Claim 1), 2) or 3), wherein said metallized and optionally printed plastic material (M) consists of a styrene-based material.

5. Multilayer thermoplastic layer as in Claim 4), wherein said metallized and optionally printed plastic material (M) is a HIPS having a low rubber content, bi-oriented by means of bubble technology extrusion.

6. Multilayer thermoplastic material as in Claim 5), wherein the rubber content of said metallized and optionally printed plastic material (M) is between 0.8 and 1.2% by weight.

7. Multilayer thermoplastic material as in Claim 1), 2) or 3), wherein said protective plastic material (P) is a coextruded based polyolefine product and preferably polyethylene based product.

8. Multilayer thermoplastic material as in Claims 1), 2) or 3), wherein said protective plastic material (P) is an ionomeric resin.

9. Multilayer thermoplastic material as in Claim 7) or 8), wherein said protective plastic material (P) is a heat-weldable material.

10. Multilayer thermoplastic material as in Claim 7) or 8), wherein said protective plastic material (P) has a barrier effect.

11. Multilayer thermoplastic material as in Claim 1), 2) or 3), wherein said base support layer (S) is formed by several coextruded HIPS layers having different physical and mechanical characteristics.

12. Multilayer thermoplastic material as in Claim 11), wherein said base support layer (S) is formed by a sandwich structure wherein the external layers are formed by HIPS having a high elastic modulus and the internal layer is formed by HIPS having a high resilience.

13. Multilayer thermoplastic material as in Claim 12), wherein the external layers have an elastic modulus greater than 2200 MPa and the internal layer has a resilience greater than 120 J/m.

14. Multilayer thermoplastic material as in Claim 2), wherein said bonding layer (A) is formed by HIPS having a high rubber content.

15. Multilayer thermoplastic material as in Claim 14), wherein the rubber content of said HIPS having a high rubber content is greater than 8% by weight.

16. Multilayer thermoplastic material as in Claim 2) or 3), wherein said bonding layer (A) consists of an extrudable polymeric adhesive.

17. Multilayer thermoplastic material as in Claims 14) to 16), wherein said bonding layer (A) is coextruded with the base support layer (S).

18. Process for the manufacture of a multilayer thermoplastic material in foil or sheet form as in any one of the preceding claims, which comprises the steps of:
- extruding or coextruding said base support layer (S), optionally provided with said coextruded bonding layer (A);
- laminating said first metallized and optionally printed layer (M), on-line, directly onto the base support layer (S), immediately after the extrusion or coextrusion operation;
- laminating said second protective layer (P), on-line, directly onto the metallized layer, immediately after the operation involving lamination of said first layer.

19. Process for the manufacture of a multilayer thermoplastic material in foil or sheet form as in any one of Claims 1) to 17), which comprises the steps of:
- extruding or coextruding said base support layer (S) optionally provided with said coextruded bonding layer (A);
- laminating on-line, directly onto the base support layer (S) and immediately after the extrusion or coextrusion operation, said first metallized and optionally printed first layer (M) and said second protective layer (P) previously bonded off-line, the protective layer (P) being positioned outside.

20. Process for the manufacture of a multilayer thermoplastic material in foil or sheet form as in any one of Claims 1) to 7), which comprises the steps of:
- extruding or coextruding said base support layer (S) optionally provided with said coextruded bonding layer (A);
- laminating said first metallized and optionally printed layer (M), on-line, directly onto the base support layer (S), immediately after the extrusion or coextrusion operation, and with the metallized side facing said base support layer (S).

21. Packaging container, **characterized in that** it is obtained by means of thermoforming a multilayer material in foil or sheet form as in any one of Claims 1) to 17).

22. Packaging Container for food products, and in particular tray for ice-cream, **characterized in that** it is obtained by means of thermoforming a multilayer material in foil or sheet form as in any one of Claims 1) to 17).
